# EUROPÄISCHE PATENTSCHRIFT

(11) **EP 0 961 418 B1**
(45) Veröffentlichungstag und Bekanntmachung des Hinweises auf die Patenterteilung: **10.11.2004**
(21) Anmeldenummer: 99109482.2
(22) Anmeldetag: 12.05.1999
(51) Int. Cl.: H04B 7/08, H01Q 1/12

(54) **Funksystem für Fernwirkfunktionen in stehenden Fahrzeugen**
Radio system for telecontrol functions in standing vehicles
Système radio pour fonction de télécommande dans les véhicules immobilisés

(30) Priorität: 25.05.1998 DE 19823237
(43) Veröffentlichungstag der Anmeldung: 01.12.1999
(73) Patentinhaber: FUBA Automotive GmbH & Co. KG, 31162 Bad Salzdetfurth (DE)
(72) Erfinder: Lindenmeier, Heinz, 82152 Planegg (DE); Hopf, Jochen, 85540 Haar (DE); Reiter, Leopold, 82205 Gilching (DE)

(56) Entgegenhaltungen:
- EP-A- 0 620 657
- EP-A- 0 714 178
- EP-A- 0 792 031
- US-A- 3 475 686
- US-A- 4 845 505

## Beschreibung

Die Erfindung betrifft ein Funksystem für Fernwirkfunktionen in stehenden Fahrzeugen mittels Funkübertragung mit Hochfrequenzsignalen im Meterwellenbereich mit einem Funksender außerhalb des Fahrzeugs zur Aussendung von nur für einen, in einem Fahrzeug befindlichen Empfänger bestimmten Funksignalen innerhalb eines vorgegebenen Funkkanals.

Funksysteme dieser Art sind bekannt aus der täglichen Anwendung als telematische Einrichtungen in Fahrzeugen für Funktionen der Fahrzeugzentralverriegelung, der Beheizung und ähnlicher Fernwirkfunktionen. Insbesondere bei der Fahrzeugzentralverriegelung, bei welcher mit einem Handsender als elektronischem Schlüssel das Fahrzeug mit Hilfe eines codierten Signals geöffnet wird, sind hohe Sicherheitsanforderungen gegeben. Hierbei ergeben sich zwei Hauptproblemkreise. Zum einen soll die Senderleistung aufgrund der in einem kleinen Handsender unterzubringenden Miniaturbatterie so klein wie möglich sein. Innerhalb eines vorgegebenen maximalen Wirkungsradius von einigen 10 Metern um das Fahrzeug soll dieses durch Initiieren eines der Empfangsanlage im Fahrzeug zugeordneten, vom Handsender ausgesendeten Funksignals zuverlässig geöffnet werden. Um außerhalb dieses vorgegebenen maximalen Wirkungsradius ein unbewußtes Öffnen durch eine Fehlbedienung des Handsenders möglichst unwirksam werden zu lassen, wäre es wünschenswert, wenn der innere Radius des Gebiets, innerhalb dessen ein Ansprechen der Empfangsanlage praktisch ausgeschlossen werden kann, nicht wesentlich größer wäre als der vorgegebene maximale Wirkungsradius. Diese Bedingung kann mit den in der Praxis verwendeten Antennenanlagen mit Einzelantennen aufgrund der Mehrwegeausbreitung und des Mangels an polarisationsunabhängigen und omnidirektionalen Antennen nur sehr schlecht erfüllt werden. Des weiteren ist auf Grund der nicht definierten Handhaltung des Schlüssels als Senders auch die Sendepolarisation nicht definiert, so daß die Omnidirektionalität für im Prinzip beliebige Polarisationen gegeben sein sollte.

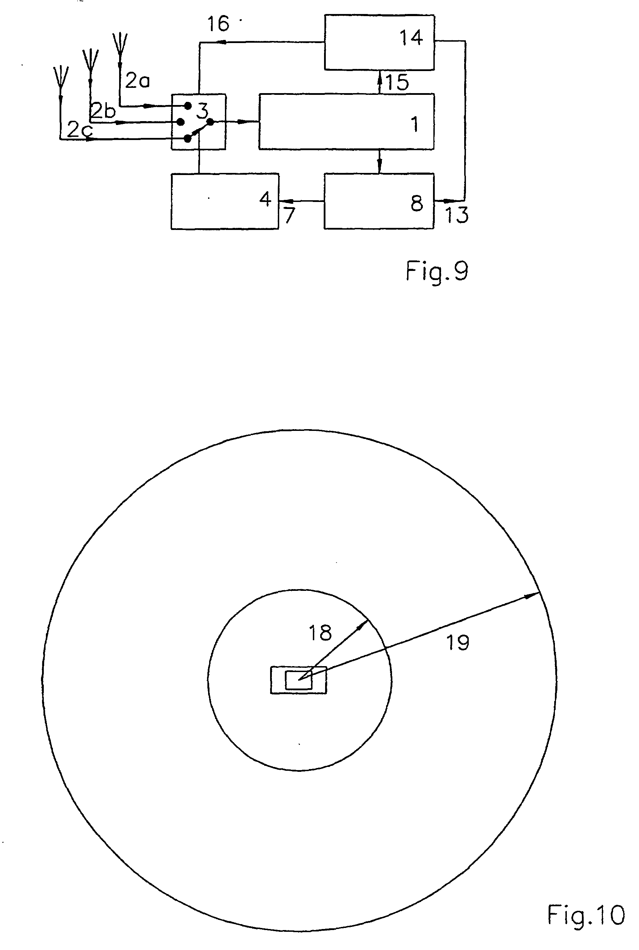

In Fig. 10 sind die Gebiete mit dem vorgegebenen maximalen Wirkungsradius 18 und dem inneren Radius des Gebiets mit Ausschluß von Fehlfunktionen 19 zur Erläuterung dargestellt.

Insbesondere integrierte Fahrzeugantennen besitzen aufgrund des Einflusses der Fahrzeugkarossiere auf die Strahlungseigenschaften in ihrem Richtdiagramm häufig ausgeprägte Einzüge. Um auch in den azimutalen Richtungen dieser Einzüge in der Entfernung des vorgegebenen maximalen Wirkungsradius eine Ansprechsicherheit zu erreichen, ist es notwendig, die Senderleistung bei den im Empfänger erreichbaren Empfindlichkeiten so groß zu wählen, dass in anderen azimutalen Richtungen mit ausgeprägten Maxima des Richtdiagramms eine unerwünscht große Reichweite für das Ansprechen des Empfängers gegeben ist. Eine ähnliche Wirkung ergibt sich durch die bekannten Pegeleinbrüche, die sich durch Überlagerung mehrerer Wellen beim Mehrwegeempfang einstellen.

Eine Maßnahme zur Vermeidung der Wirkung von Pegeleinbrüchen z.B aufgrund der Richtungsabhängigkeit von Antennen auf einem Flugzeug ist aus der Patentschrift US-A-3 475 686 bekannt. Dort wird mit Hilfe einer Antennendiversityeinrichtung ohne Einfall eines Hochfrequenzsignals auf der Empfangsfrequenz zunächst zwischen mehreren Antennen wechselweise umgeschaltet, bis nach Einfall eines Hochfrequenzsignals das System aufgrund der Bewegung des Flugzeugs laufend auf die Antenne mit dem besseren Signal umschaltet. Dieses System dient zur allgemeinen Überwachung eines bestimmten Funkkanals und dient zur besseren Erkennbarkeit des Auftretens eines beliebigen Signals in diesem Funkkanal. Die Identifizierung z.B. eines digitalen Signalinhalts und damit des dieses Signal aussendenden Senders ist nicht vorgesehen und mit dieser Einrichtung aufgrund des laufenden Antennenwechsels ohne Beschädigung dieses Signals nicht möglich.

Aufgabe der Erfindung ist es deshalb, bei einem Funksystem nach dem Oberbegriff des Anspruchs 1 zu erreichen, dass mit einer möglichst kleinen Senderleistung innerhalb eines Gebiets mit vorgegebenem maximalem Wirkungsradius 18 als Abstand vom Fahrzeug eine nahezu sichere Fernwirkfunktion durchgeführt werden kann und zum Schutz gegen unerwünschtes Ansprechen der Empfangsanlage infolge eines Fehlbefehls oder durch unerwünschte Funksignale für ein anderes Fahrzeug der innere Radius 19 des Gebiets, außerhalb dessen eine Fehlfunktion praktisch ausgeschlossen werden kann, um einen möglichst kleinen Faktor größer ist als er vorgegebene maximale Wirkungsradius 18. Diese Aufgabe wird erfindungsgemäß bei einem Funksystem für Fernwirkfunktionen in stehenden Fahrzeugen durch die kennzeichnenden Merkmale des Anspruches 1 gelöst.

Eine diversitätsmäßige Entkopplung von Empfangsantennen am Fahrzeug liegt vor, wenn die Empfangssignale im Hinblick auf Einbrüche des Hochfrequenzpegels unterschiedlich sind. Bei hinreichend großer Anzahl von im Fahrzeug befindlichen entsprechend entkoppelter Antennen ist die Wahrscheinlichkeit entsprechend groß, daß zumindest eine der Antennen bei den gegebenen Verhältnissen des Funkfeldes in ihrem Empfangssignal keinen ausgeprägten Pegeleinbruch aufweist. Antennen 2 mit Auswahlschaltung 3 im Sinne der vorliegenden Erfindung können ebenso durch eine Antennenlage mit steuerbarer Schalteinrichtung gebildet vorliegen, wie sie in der DE 196 07 045 in den Figuren 1 bis 3 und in Fig. 4 beschrieben sind. Dort werden diversitätsmäßig voneinander entkoppelte Antennen unter anderem auch dadurch erzeugt, daß durch Beschaltung komplexer Antennenstrukturen unterschiedliche Antenneneigenschaften erzielt werden.

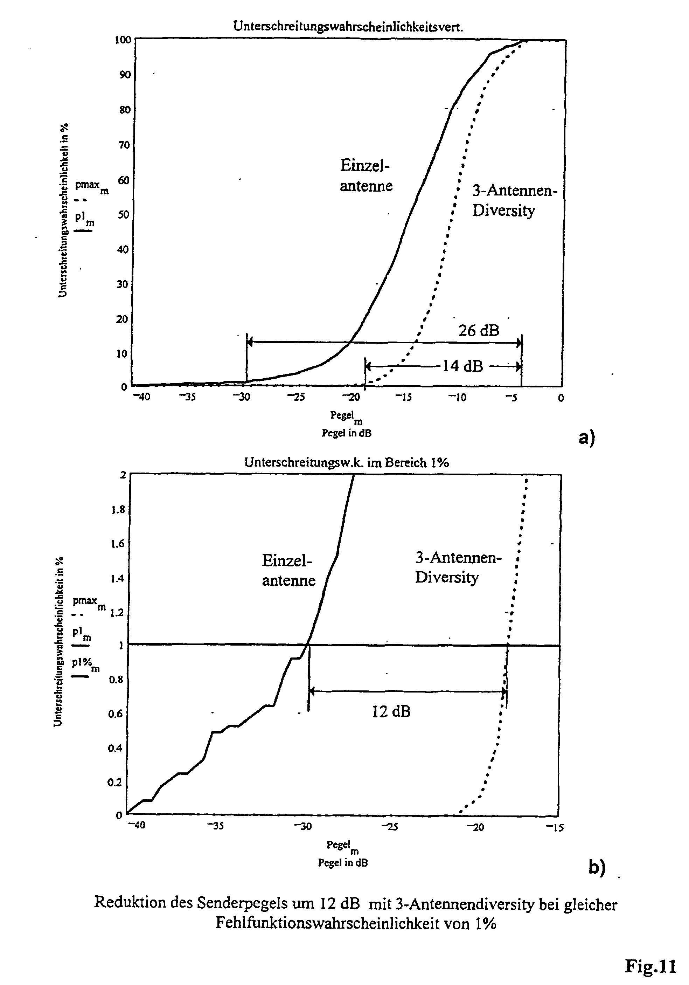

Die Senderleistung kann somit so gering gewählt werden, daß unter der Voraussetzung der Vermeidung eingeprägter Pegeleinbrüche im vorgegebenen maximalen Wirkungsradius 18 ein sicheres Ansprechen der Empfangsanlage mit gegebener Empfängerempfindlichkeit gewährleistet ist. Mit der Erfindung ist der Vorteil verbunden, daß mit größer gewählter Anzahl der Antennen, die für den vorgegebenen maximalen Wirkungsradius 18 notwendige Senderleistung für sicheres Ansprechen weitgehend unabhängig ist vom gegebenem Funkfeld, welches sich aus der Umgebung des stehenden Fahrzeugs und der Position des Senders ergibt.
Dieser Sachverhalt soll im folgenden anhand des Beispiels einer Rayleigh-Verteilung näher erläutert werden. Hierfür ist in Fig. 11a die Wahrscheinlichkeitsverteilung für die Unterschreitung des Hochfrequenzpegels für eine Einzelantenne und dem jeweils größten Signal aus drei Antennen über dem Hochfrequenzpegel aufgetragen. Fordert man in diesem Beispiel eine Ansprechsicherheit von 99 % am vorgegebenen maximalen Wirkungsradius 18, so entspricht dies einer Unterschreitungswahrscheinlichkeit des Pegels von 1%.

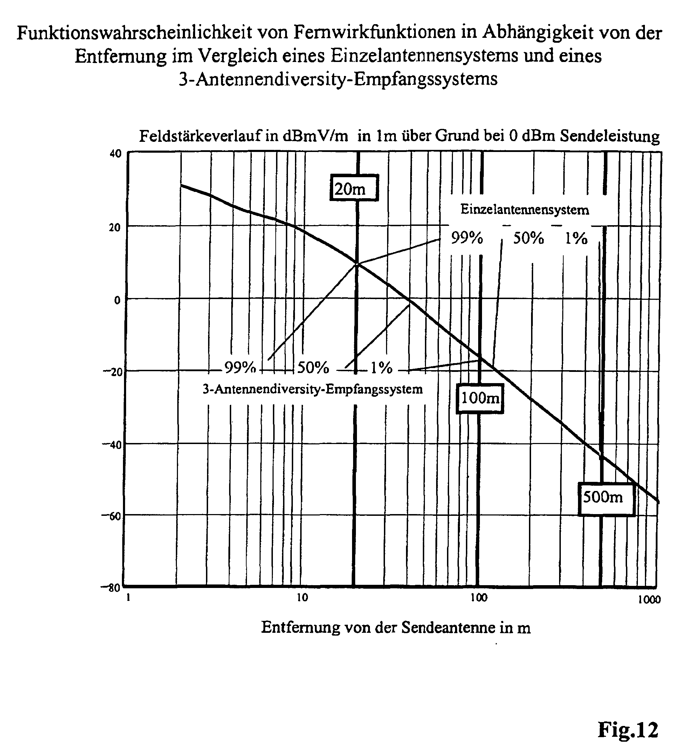

Dieser Bereich ist in Fig. 11b aus Fig. 11a vergrößert gezeichnet. Bei gleicher Ansprechsicherheit kann somit der Senderpegel in diesem Beispiel um 12dB kleiner gewählt werden. Dadurch würde sich die gestrichelte Kurve in Fig. 11a um 12dB zu kleineren Pegelwerten hin verschieben. Der Radius 19 andererseits kann aus der Pegeldifferenz für die Punkte 1% und 99% für die Unterschreitungswahrscheinlichkeit aus Fig. 11a abgelesen werden. Diese Pegelunterschiede betragen bei der Einzelantenne 26dB und beim 3-Antennendiversity 14dB. Die unterschiedlichen Reichweiten ergeben sich aus der Kurve in Fig. 12, welche den typischen mittleren Feldstärkenverlauf, also ohne die Rayleighfadings, über der Entfernung darstellt. Wird die Senderleistung sowohl für die Einzelantenne als auch für das 3-Antennendiversity so eingestellt, daß sich bei einem vorgegebenem Wirkungsradius 18 von 20m eine Funktionswahrscheinlichkeit von 99% ergibt, so ist im Fall der Einzelantenne die Funktionswahrscheinlichkeit erst bei einem Abstand von 500 m auf 1 % abgesunken (Prozentzahlen oberhalb der Kurve).

Im Gegensatz hierzu ist bei einer 3-Antennenempfangsanlage nach der Erfindung die Funktionswahrscheinlichkeit bereits bei einem Radius 19 von 100 m auf 1% abgesunken. Die hier zugrunde gelegte Rayleigh-Verteilung dient als Beispiel für die Wirkungsweise der Erfindung und trifft in dieser ausgeprägten Form insbesondere auf üblichen Parkplätzen und den betrachteten kleinen Abständen nicht vollständig zu, beschreibt jedoch die kleinere Schwankung der Empfangsamplitude bei gegebener Senderleistung in einem bestimmten Abstand im Vergleich zur Empfangsanlage mit Einzelantenne. Somit ergibt sich mit der Erfindung stets ein kleinerer Quotient aus dem inneren Radius 19 und dem vorgegebenen maximalen Wirkungsradius 18.
Erfindungsgemäße Ausführungsbeispiele sind in den angegebenen Zeichnungen dargestellt und werden im folgenden näher beschrieben. Im einzelnen zeigt:
Fig. 1: Diversityantennen 2a,b,c mit Auswahlschaltung 3, Empfänger 1 und Zeitgeber 4 zur sequentiellen Durchschaltung der Antennen nach der Erfindung.
Fig. 2: Empfangsanlage des Funksystems nach der Erfindung gemäß Fig. 1 mit Signalerkennungseinrichtung 8 und Stopsignal 7 zum Anhalten des Zeitgebers 4.
Fig. 3: Empfangsanlage des Funksystems nach der Erfindung gemäß Fig. 2 mit HF-Pegelerkennung 6 in der Signalerkennungseinrichtung 8 zur Voridentifikation des Sendersignals.
Fig. 4: Empfangsanlage des Funksystems nach der Erfindung gemäß Fig. 2 mit Identifikations-Logikschaltung 17 zur Identifikation des digital codierten Sendersignals.
Fig. 5: Zeitablauf nach einer initiierten Aussendung vom Handsender bei mehrfacher (4-facher) Wiederholung eines codierten Schlüsselworts und zeitlich anschließendem Femwirkfunktionssignal sowie die sequentielle Anschaltung der Antennen 1 und 2 einer 2-Antennendiversity-Anlage mit Kennzeichnung der Schlüsselworterkennung mit Antenne 2 und anschließend ausgelöstem Stopsignal zur dauerhaften Durchschaltung der Antenne 2.
Fig. 6: Empfangsantennenanlage mit drei Antennen auf der Heckscheibe eines Fahrzeugs mit unterschiedlichen Anschlußstellen zur Erreichung der diversitätsmäßigen Entkopplung.
Fig. 7: Aktive Antennen mit kanalselektiver Signal/Rausch-Optimierung.
Fig. 8: Aktive Antennen wie in Fig. 7 mit gleichzeitiger Wirkung aus Auswahlschaltung 3 durch stromsparende sequentielle Anschaltung der Vorspannung der Steuerelektrode der aktiven Elemente.
Fig. 9: Empfangsanlage des Funksystems nach der Erfindung wie in den Figuren 1 mit 4 mit Startsignal 13 zur Aktivierung des Diversityprozessors 14 zur Auswertung des vom Empfänger 1 gelieferten Prüfsignals 15 mit Schaltsignal 16 zur Weiterschaltung der Auswahtschaltung 3.
Fig. 10: Darstellung des Wirkungsgebiets mit vorgegebenem maximalen Wirkungsradius 18 für Ansprechsicherheit und des Gebiets mit innerem Radius 19 für Ausschluß von Fehlfunktionen.
Fig. 11:
   a) Wahrscheinlichkeitsverteilung für die Unterschreitung des Hochfrequenzpegels für eine Einzelantenne und dem jeweils größten Signal aus drei Antennen über dem Hochfrequenzpegel einer Rayleigh-Feldverteilung.
   b) Wie Fig. a, jedoch Bereich mit Unterschreitungswahrscheinlichkeit zwischen 0 und 2% vergrößert dargestellt.
Fig. 12: Funktionswahrscheinlichkeit von Fernwirkfunktionen in Abhängigkeit von der Entfernung im Vergleich eines Einzelantennensystems (Prozentzahlen oberhalb der Kurve) und eines 3-Antennendiversity-Empfangssystems (Prozentzahlen unterhalb der Kurve).

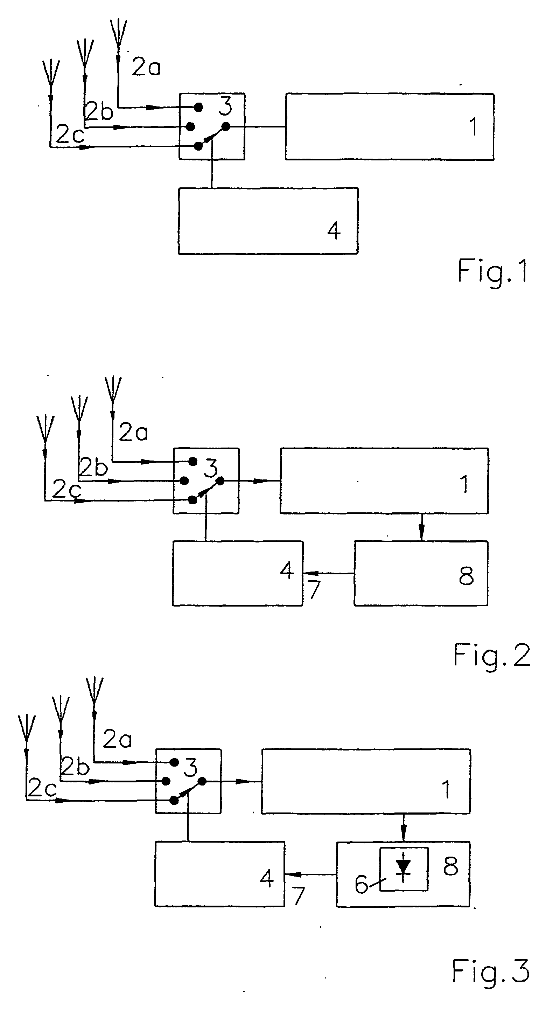

Bei einem Funksystem für Fernwirkfunktionen der vorliegenden Art werden wesentliche Funktionen erst nach Identifikation des Sendersignals durchgeführt. Damit das Sendersignal unabhängig von der Haltung des Senders und dessen Polarisation sicher empfangen werden kann, ist es notwendig, mehrere Antennen erfindungsgemäß im Empfangssystem einzusetzen. Aufgrund des Sachverhalts, daß durch zeitinvariante Superposition mehrerer Empfangssignale wieder eine Antennencharakteristik entsteht und Pegeleinbrüche dadurch nicht vermieden werden können, wird erfindungsgemäß vorgeschlagen, mehrere Antennen einzusetzen, welche wie in Fig. 1 zeitlich sequentiell zum Empfänger durchgeschaltet werden. Vor Initiierung des Hochfrequenzsignals befindet sich die Empfangsanlage im Bereitschaftsmodus und schaltet mit einem Zeitgeber 4, dessen Zeitintervalle einstellbar sind den Auswahlschalter 3 um eine Stellung weiter.

Nach Erkennung einer zugeordneten Nachricht in der Signalerkennungseinrichtung 8 in Fig. 2 löst diese ein Stopsignal 7 aus und beeinflußt den Zeitgeber 4, so daß keine Weiterschaltung in der Auswahlschaltung 3 erfolgt und die zeitlich folgende Nachricht mit der Antenne empfängt, welche mit deren Signal das Funksignal erkannt wurde. Damit ist der Bereitschaftsmodus der Empfangsanlage beendet und diese aktiviert. Eine Voridentifikation eines Hochfrequenzsignals im schmalen Funkkanal für Fernwirkfunktionen, wie z.B. bei den Frequenzen 315 MHz und 433 MHz, kann wie in Fig. 3 mit Hilfe einer HF-Pegelerkennung 6 innerhalb der Signalerkennungseinrichtung 8 erfolgen. Nach der Voridentifikation kann vorteilhafter Weise der Empfänger 1 auf volle Stromaufnahme aktiviert werden, und die weitere endgültige Identifikation des Sendersignals erfolgen. Zur Voridentifikation kann in einer weiteren vorteilhaften Ausgestaltung der Erfindung eine spezifische kontinuierliche Modulation des Hochfrequenzträgers im Sender erfolgen. In der Signalerkennungseinrichtung 8 ist dann sinngemäß ein Demodulator zur Erkennung der spezifischen Modulation einzusetzen.

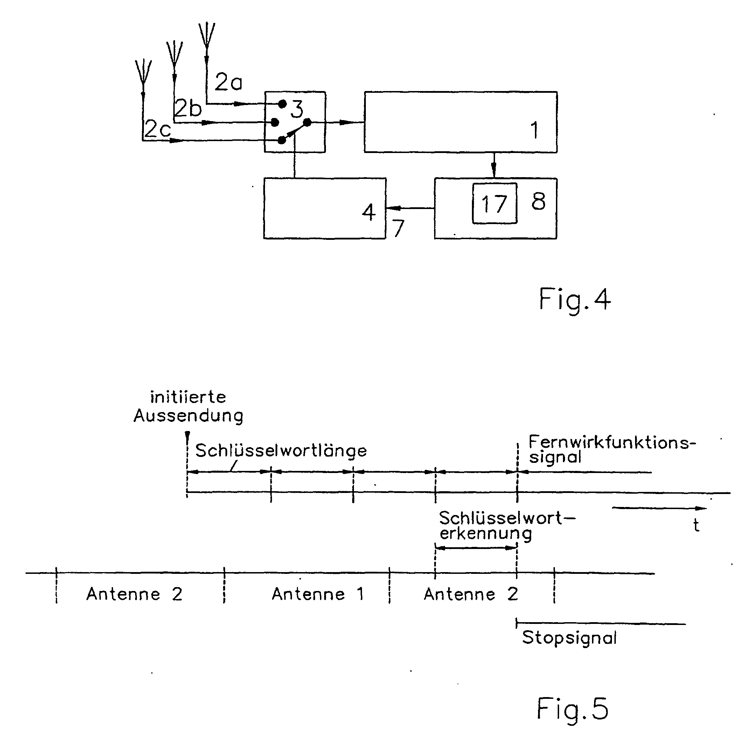

Ein äußerst vorteilhaftes Verfahren zur Erkennung des Sendersignals besteht bekanntermaßen in der Aussendung eines digital codierten Schlüsselworts. Dieses kann mit einer Identifikations-Logikschaltung 17 in der Signalerkennungseinrichtung 8 in Fig. 4 erfolgen. Erfindungsgemäß ist es deshalb vorteilhaft, das Schlüsselwort vor Aussendung des Fernwirkfunktionssignals mehrfach auszusenden, so daß sichergestellt ist, daß eine Antenne, deren Empfangssignal nicht von einem Pegeleinbruch betroffen ist, dieses Signal zur Erkennung an den Empfänger 1 durchschalten kann. Um dies sicherzustellen, werden die Zeitintervalle für die Durchschaltung der Antennen zweckmäßiger Weise zeitlich mindestens doppelt so lange gewählt, wie die zeitliche Länge des Schlüsselworts. Ein sinnvolles Beispiel für diese zeitlichen Abläufe ist in Fig. 5 gegeben. Bei der Verwendung von N Antennen sollte somit das Schlüsselwort mindestens 2N mal ausgesendet werden.

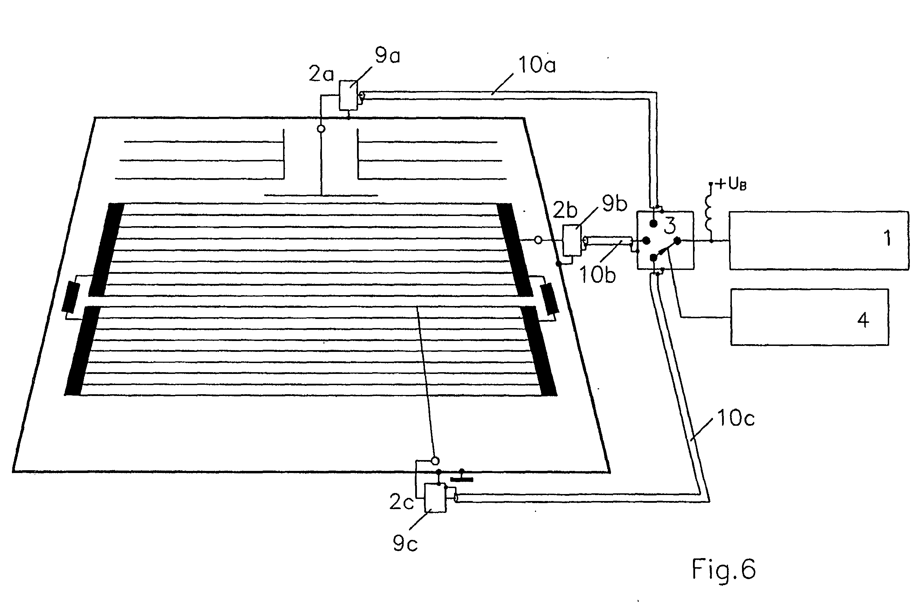

In Fig. 6 ist eine 3-Antennen-Empfangsanlage für ein Funksystem nach der Erfindung dargestellt. Alle Antennen sind hierbei auf der Heckfensterscheibe eines Fahrzeugs angebracht. Häufig werden für den Fernsehempfang in Fahrzeugen Mehrantennendiversity-Systeme verwendet. Die Empfangssignale für Fernwirkfunktionen können vorteilhafter Weise diesen Antennen entnommen werden.

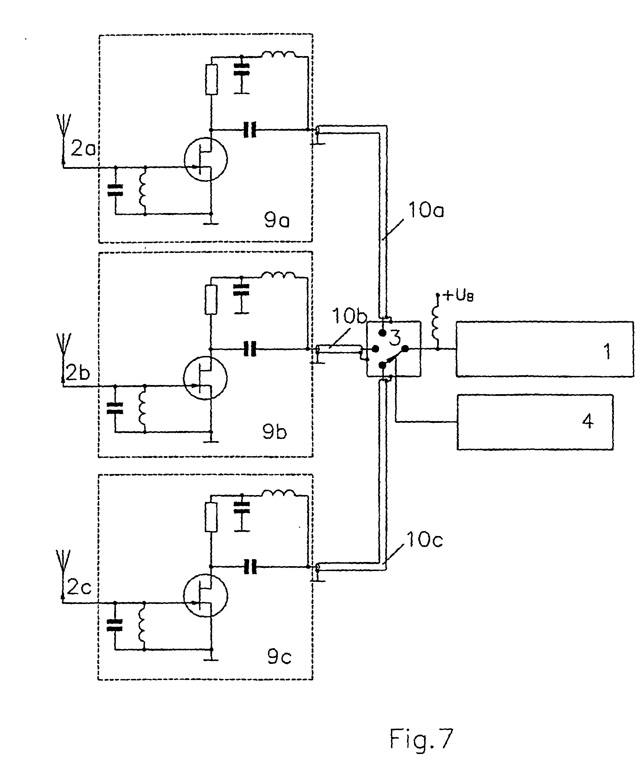

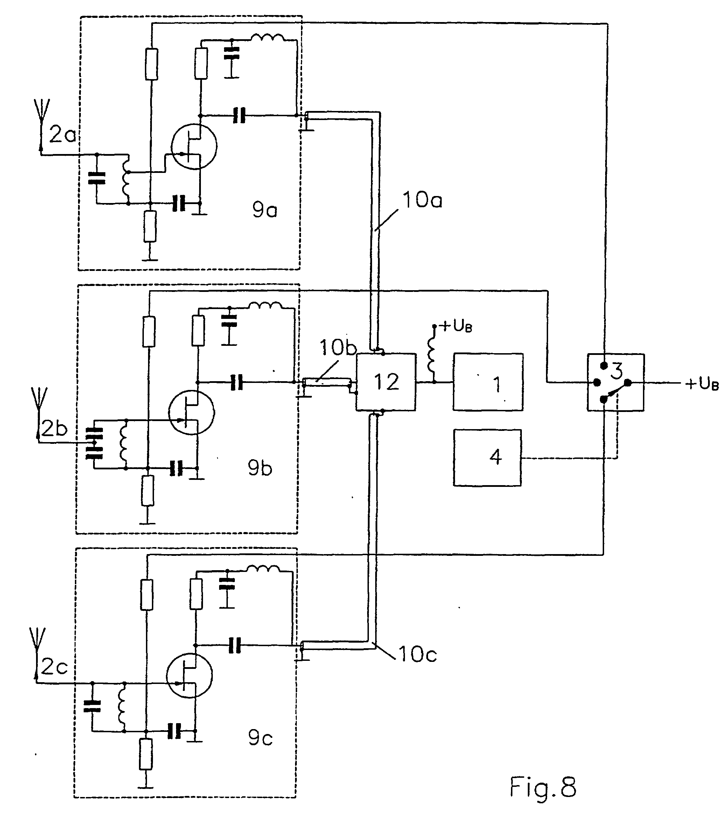

Aufgrund der Schmalbandigkeit der verfügbaren Funkkanäle für Fernwirkfunktionen können hochempfindliche aktive Antennen, wie in Fig. 7, gestaltet werden, mit kanalselektivem, optimiertem Signal/Rauschverhältnis. Aus Gründen der Stromersparnis während des Bereitschaftsmodus ist es vorteilhaft, nur die aktive Antenne mit Ruhestrom zu versorgen, welche zum Empfänger durchgeschaltet ist. Aufgrund des Stromverbrauchs einer mit elektronischen Bauelementen realisierten Auswahlschaltung 3 ist es vorteilhaft, den aktiven Antennen die Funktion der Auswahlschaltung einzugliedern. Dies geschieht dadurch, daß wie in Fig. 8, zur Anschaltung einer Antenne lediglich der für die Vorspannung der Steuerelektrode des aktiven Elements notwendige kleine Strom durchgeschaltet wird. Während der Aussendung des Fernwirksignals wird häufig der Sender in Relation zum stehenden Fahrzeug bewegt. Damit ergeben sich die gleichen Probleme durch Mehrwegeausbreitung mit zeitlich auftretenden Pegeleinbrüchen. Es ist deshalb vorteilhaft, nach Erkennung des Signals und Auftreten des Stopsignals 7 mit Hilfe eines Startsignals 13 einen Diversityprozessor 14 zu aktivieren. Dieser erhält ein Prüfsignal 15 aus dem Empfänger 1, welches im Diversityprozessor 14 nach bekannten Kriterien hinsichtlich seiner Verwertbarkeit für die Telematikfunktion bewertet. Bei Unterschreitung der Verwertbarkeitsgrenze im Diversityprozessor 14 generiert dieser ein Diversity-Schaltsignal 16, welches der Auswahlschaltung 3 zugeführt ist und diese weiterschaltet.

### Nummernliste:

- (1): Empfänger
- (2): Empfangsantennen
- (3): Auswahlschaltung
- (4): Zeitgeber
- (5): Fahrzeug
- (6): HF-Pegelerkennung
- (7): Stopsignal
- (8): Signalerkennungeinrichtung
- (9): Antennenverstärker
- (10): HF-Leitungen
- (11): elektronischen Schalter
- (12): Summationsschaltung
- (13): Startsignal
- (14): Diversityprozessor
- (15): Prüfsignal
- (16): Diversity-Schaltsignal
- (17): Identifikations-Logikschaltung

## Patentansprüche

1. Funksystem adaptiert für Fernwirkfunktionen in unbewegten Fahrzeugen mittels Funkübertragung mit Hochfrequenzsignalen im Meterwellenbereich mit einem Funksender außerhalb des Fahrzeugs zur Aussendung von nur für eine, in einem Fahrzeug befindliche Empfangsanlage bestimmten Funksignalen innerhalb eines vorgegebenen Funkkanals
**dadurch gekennzeichnet, daß**
mindestens zwei Empfangsantennen (2a, 2b) am Fahrzeug (5) angebracht sind, welche im Frequenzbereich des Funkkanals diversitätsmäßig voneinander entkoppelt sind und von denen während des Bereitschaftsmodus der Empfangsanlage jeweils eine mit Hilfe einer Auswahlschaltung (3) zum auf diesem Frequenzkanal abgestimmten Empfänger (1) durchgeschaltet ist und ein Zeitgebenr (4) mit einstellbaren Zeitintervallen vorhanden ist, welcher die Auswahlschaltung (3) ansteuert, sodaß die Empfangsantennen (2a,2b) sequentiell jeweils über die Dauer eines vorgegebenen, für die Erkennung eines Funksignals in dem vorgegebenen Funkkanal bzw. eines für diesen Empfänger bestimmten Funksignals notwendigen Zeitintervalls zum Empfänger (1) durchgeschaltet sind und im Empfänger (1) eine Signalerkennungseinrichtung (8) vorhanden ist, welche bei Empfang eines im Funkkanal auftretenden bzw. eines der Empfangsanlage zugeordneten Signals ein Stopsignal (7) generiert, welches die sequentielle Weiterschaltung der Auswahlschaltung (3) anhält.

2. Funksystem für Fernwirkfunktionen nach Anspruch 1 mit Aussendung eines durch Betätigung des Funksenders initiierten modulierten Hochfrequenzträgers zur Idendifikation des Senders und zur Ausführung der Fernwirkfunktion
**dadurch gekennzeichnet, daß** nach Anhalten der sequentiellen Weiterschaltung diejenige Antenne für den Empfang der anschließend empfangenen Nachricht zur Identifikation des Senders und zur Ausführung der Fernwirkfunktion durchgeschaltet ist, mit der das Hochfrequenzsignal erkannt worden ist.

3. Funksystem für Fernwirkfunktionen nach Anspruch 2
**dadurch gekennzeichnet, daß**
die Signalerkennungseinrichtung (8) eine Einrichtung zur HF-Pegelerkennung (6) enthält und bei Erkennung des Hochfrequenzsignalpegels ein Stopsignal (7) generiert ist.

4. Funksystem für Fernwirkfunktionen nach Anspruch 2 mit Aussendung eines durch Betätigung des Funksenders initiierten modulierten Hochfrequenzträgers zur Idendifikation des Senders und zur Ausführung der Fernwirkfunktion
**dadurch gekennzeichnet, daß**
zur Voridentifikation des empfangenen Signals im Funksender eine spezifische kontinuierliche Modulation verwendet ist, an welches zeitlich die gesendetet Nachricht zur endgültigen Identifikation des Senders und zur Ausführung der Fernwirkfunktion angeschlossen sind und in der Signalerkennungseinrichtung (8) zur Voridentifikation ein Demodulator zur Erkennung der spezifischen Modulation vorhanden ist.

5. Funksystem für Fernwirkfunktionen nach Anspruch 2 mit Aussendung eines durch Betätigung des Funksenders initiierten Hochfrequenzträgers mit einem aufmodulierten digital codierten Schlüsselsignal zur Identifikation des Senders mit zeitlich anschließender digitaler Nachricht zur Ausführung der Fernwirkfunktion
**dadurch gekennzeichnet, daß**
die Zeitintervalle im Zeitgeber (4) zur Durchschaltung jeweils einer der Antennen (2) zum Empfänger (1) um ein ausreichendes Maß länger sind als die zeitliche Länge des Schlüsselsignals und daß in der Signalerkennungseinrichtung (8) eine Identifikations-Logikschaltung (17) zur Erkennung des Schlüsselsignals vorhanden ist und bei Vorliegen des Schlüsselsignals ein Stopsignal (7) generiert ist, welches die sequentielle Weiterschaltung der Auswahlschaltung (3) anhält, sodaß diejenige Antenne für den Empfang der anschließend empfangenen digitalen Nachricht zur Ausführung der Fernwirkfunktion zum Empfänger (1) durchgeschaltet ist, mit deren Ausgangssignal das Schlüsselsignal identifiziert worden ist.

6. Funksystem für Fernwirkfunktionen nach Anspruch 5
**dadurch gekennzeichnet, daß**
zur Sicherung der Erkennung des Schlüsselworts dieses im Datenprotokoll vor Aussendung der digitalen Nachricht zur Ausführung der Fernwirkfunktion mehrfach wiederholt ist und die Zeitintervalle mindestens doppelt solange gewählt sind wie die zeitliche Länge des Schlüsselsignals und die Anzahl der Wiederholungen mindestens zweimal so groß ist wie die Anzahl der Antennen am Fahrzeug.

7. Funksystem für Fernwirkfunktionen nach Anspruch 1 bis 6
**dadurch gekennzeichnet, daß**
mindestens eine der Antennen bevorzugt für den Empfang horizontal polarisierter Wellen und mindestens eine weitere für den Empfang vertikal polarisierter Wellen geeignet ist.

8. Funksystem für Fernwirkfunktionen nach Anspruch 1 bis 7
**dadurch gekennzeichnet, daß**
die Pegeleinzüge in den azimutalen Richtdiagrammen nicht deckungsgleich sind

9. Funksystem für Fernwirkfunktionen nach Anspruch 1 bis 8
**dadurch gekennzeichnet, daß**
alle Antennen als Heckfensterscheibenantennen ausgeführt sind.

10. Funksystem für Fernwirkfunktionen nach Anspruch 1 bis 8
**dadurch gekennzeichnet, daß**
zur Vermeidung von Abschattungen des Empfangs mindestens eine der Antennen im Front-und mindestens eine der Antennen im Heckbereich des Fahrzeugs angebracht sind.

11. Funksystem für Fernwirkfunktionen nach Anspruch 1 bis 8
**dadurch gekennzeichnet, daß**
mindestens eine der Antennen im Frontstoßfänger und mindestens eine der Antennen in der Heckstoßfänger angebracht sind.

12. Funksystem für Fernwirkfunktionen nach Anspruch 1 bis 8
**dadurch gekennzeichnet, daß**
mindestens eine der Antennen im Frontstoßfänger und mindestens eine der Antennen in der Heckfensterscheibe des Fahrzeugs angebracht sind.

13. Funksystem für Fernwirkfunktionen nach Anspruch 1 bis 8
**dadurch gekennzeichnet, daß**
mindestens eine der Antennen in einem der Außen- und Innenspiegel und mindestens eine der Antennen in der Heckfensterscheibe des Fahrzeugs angebracht sind.

14. Funksystem für Fernwirkfunktionen nach Anspruch 1 bis 8
**dadurch gekennzeichnet, daß**
mindestens eine der Antennen in einer der Seitenfensterscheiben und mindestens eine der Antennen in der Heckfensterscheibe des Fahrzeugs angebracht sind.

15. Funksystem für Fernwirkfunktionen nach Anspruch 1 bis 14
**dadurch gekennzeichnet, daß**
zur Verbesserung der Rauschempfindlichkeit aktive Antennen mit kanalselektiver Signal/Rausch-Optimierung verwendet sind.

16. Funksystem für Fernwirkfunktionen nach Anspruch 15
**dadurch gekennzeichnet, daß**
zur Stromersparnis im Bereitschaftsmodus der Empfangsanlage jede aktive Antenne einen Ruhegleichstrom nur zu den Zeitintervallen führt, während deren die Antenne zum Empfänger durchgeschaltet ist.

17. Funksystem für Fernwirkfunktionen nach Anspruch 16
**dadurch gekennzeichnet, daß**
die Ausgangssignale der aktiven Antennen in einer Summationsschaltung (12) zusammengefaßt sind und die Auswahlschaltung (3) dadurch realisiert ist, daß die Ruhestromversorgung der aktiven Antennen während der Zeitintervalle sequentiell durch einen stromsparenden elektronischen Schalter zur Verteilung der Vorspannung an die Steuerelektroden der aktiven Elemente, welcher vom Zeitgeber (4) gesteuert ist, gegeben ist.

18. Funksystem für Fernwirkfunktionen nach Anspruch 1 bis 17
**dadurch gekennzeichnet, daß** in der Signalerkennungseinrichtung (8) nach Auftreten des Stopsignals (7) ein Startsignal (13) generiert ist, welches einem Diversityprozessor (14) zugeführt ist und diesen aktiviert und dem Diversityprozessor (14) ein aus dem Empfangssignal abgeleitetes Prüfsignal (15) aus dem Empfänger (1) zugeführt ist, welches im Diversityprozessor (14) hinsichtlich seiner Verwertbarkeit für die Telematikfunktionen bewertet ist und bei Unterschreitung der Verwertbarkeitsgrenze im Diversityprozessor (14) ein Diversity-Schaltsignal (16) generiert ist, welches der Auswahlschaltung (3) zugeführt ist und diese weiterschaltet.

## Claims

1. Radio system adapted for remote operating functions in stationary vehicles by means of radio transmission with high frequency signals in the very high frequency range, having a radio transmitter outside the vehicle for transmitting only radio signals within a given radio channel intended for receiver equipment located in a vehicle, **characterised in that** at least two receiver aerials (2a, 2b) are mounted on the vehicle (5), which are uncoupled from one another for diversity in the frequency range of the radio channel and one of which is switched through, by means of a selection circuit (3), to the receiver (1) tuned to this frequency channel, when the receiver equipment is in standby mode, and a timer (4) with adjustable time intervals is provided which actuates the selection circuit (3) so that the receiver aerials (2a, 2b) are each sequentially switched through to the receiver (1) for the duration of a given period of time needed for the recognition of a radio signal in the given radio channel or of a radio signal intended for this receiver, and in the receiver (1) there is a signal recognition device (8) which on receiving a signal occurring in the radio channel or associated with the receiver equipment generates a stop signal (7) which stops the sequential stepping on of the selection circuit (3).

2. Radio system for remote operating functions according to claim 1 with transmission of a modulated radio-frequency carrier initiated by the actuation of the radio transmitter in order to identify the transmitter and perform the remote action function, **characterised in that** after the sequential stepping on has ended the particular aerial with which the high frequency signal has been recognised is switched through for receiving the subsequently received information for identifying the transmitter and for performing the remote operating function.

3. Radio system for remote operating functions according to claim 2, **characterised in that** the signal recognition device (8) contains a device for recognising HF levels (6) and a stop signal (7) is generated when the high frequency signal level is recognised.

4. Radio system for remote operating functions according to claim 2 with transmission of a modulated radio-frequency carrier initiated by the actuation of the radio transmitter in order to identify the transmitter and perform the remote action function, **characterised in that** a specific continuous modulation is used for preliminary identification of the signal received in the radio transmitter, this modulation being followed, in rime, by the information transmitted for definitive identification of the transmitter and for performing the remote action function, and for the preliminary identification a demodulator is provided in the signal recognition device (8) for recognising the specific modulation.

5. Radio system for remote operating functions according to claim 2 with transmission of a radio-frequency carrier initiated by actuation of the radio transmitter, having a modulated, digitally coded code signal for identifying the transmitter, followed in time by subsequent digital information for performing the remote operating function, **characterised in that** the time intervals in the timer (4) for switching one of the aerials (2) through to the receiver (1) are sufficiently longer than the length of the code signal and **in that** an identification logic circuit (17) for recognising the code signal is provided in the signal recognition device (8) and when the code signal is present a stop signal (7) is generated which stops the sequential stepping on of the selection circuit (3) so that the particular aerial whose output signal has identified the code signal is switched through to the receiver (1) in order to receive the subsequently received digital information for performing the remote operating function.

6. Radio system for remote operating functions according to claim 5, **characterised in that** in order to ensure recognition of the code word the latter is repeated several times in the data protocol before the transmission of the digital information for performing the remote operating function and the time intervals are chosen to be at least twice as long as the length of the code signal and the number of repetitions is at least twice as great as the number of aerials on the vehicle.

7. Radio system for remote operating functions according to claims 1 to 6, **characterised in that** at least one of the aerials is preferentially suited to receiving horizontally polarised waves and at least one another is suitable for receiving vertically polarised waves.

8. Radio system for remote operating functions according to claims 1 to 7, **characterised in that** the level capture areas in the azimuthal directivity patterns are not congruent.

9. Radio system for remote operating functions according to claims 1 to 8, **characterised in that** all the aerials are constructed as rear windscreen aerials.

10. Radio system for remote operating functions according to claims 1 to 8, **characterised in that** in order to avoid shadowing of the reception at least one of the aerials is mounted in the front part of the vehicle and at least one of the aerials is mounted in the rear part of the vehicle.

11. Radio system for remote operating functions according to claims 1 to 8, **characterised in that** at least one of the aerials is mounted in the front bumper and at least one of the aerials is mounted in the rear bumper.

12. Radio system for remote operating functions according to claims 1 to 8, **characterised in that** at least one of the aerials is mounted in the front bumper and at least one of the aerials is mounted in the rear windscreen of the vehicle.

13. Radio system for remote operating functions according to claims 1 to 8, **characterised in that** at least one of the aerials is mounted in one of the outer and inner mirrors and at least one of the aerials is mounted in the rear windscreen of the vehicle.

14. Radio system for remote operating functions according to claims 1 to 8, **characterised in that** at least one of the aerials is mounted in one of the side windows and at least one of the aerials is mounted in the rear windscreen of the vehicle.

15. Radio system for remote operating functions according to claims 1 to 14, **characterised in that** in order to improve the noise sensitivity, active aerials with channel-selective signal-to-noise optimising are used.

16. Radio system for remote operating functions according to claim 15, **characterised in that** in order to save current in the standby mode of the receiver equipment each active aerial supplies no-load direct current only at those times when the aerial is switched through to the receiver.

17. Radio system for remote operating functions according to claim 16, **characterised in that** the output signals from the active aerials are combined in a summation circuit (12) and the selection circuit (3) is produced as a result of the no-load current supply from the active aerials during the time intervals being passed sequentially through a current-saving electronic switch for distributing the bias to the control electrodes of the active elements, this switch being controlled by the timer (4).

18. Radio system for remote operating functions according to claims 1 to 17, **characterised in that** in the signal recognition device (8) after the stop signal (7) has appeared a start signal (13) is generated which is fed to a diversity processor (14) and activates it, and the diversity processor (14) is supplied with a test signal (15), derived from the reception signal, from the receiver (1), this signal (15) being evaluated in the diversity processor (14) with regard to its usefulness for the telematic functions, and if it falls below the limits of usefulness a diversity switching signal (16) is generated in the diversity processor (14), this signal (16) being supplied to the selection circuit (3) and stepping said circuit on.

## Revendications

1. Système radio adapté pour des fonctions de télécommande dans les véhicules immobilisés au moyen d'une transmission radio par signaux à haute fréquence dans la plage d'ondes métriques avec un émetteur radio situé à l'extérieur du véhicule pour l'émission de signaux radio destinés à une seule installation de réception installée à l'intérieur du véhicule sur un canal radio prédéterminé, **caractérisé en ce qu'**au moins deux antennes réceptrices (2a, 2b) sont disposées sur le véhicule (5), qui sont découplées l'une de l'autre dans le sens d'une diversité dans la plage de fréquences du canal radio et dont une à la fois est commutée vers un récepteur (1) réglé sur ce canal de fréquence à l'aide d'un circuit de sélection (3) pendant le mode de disponibilité de l'installation réceptrice, et il est prévu une horloge (4) avec des intervalles de temps réglables qui commande le circuit de sélection (3) de telle sorte que les antennes réceptrices (2a, 2b) soient commutées en séquence avec le récepteur (1) pendant la durée d'un intervalle de temps prédéterminé nécessaire à la reconnaissance d'un signal radio dans le canal radio prédéterminé ou d'un signal radio destiné à ce récepteur, et il est prévu dans le récepteur (1) une installation de reconnaissance des signaux (8) qui génère lors de la réception d'un signal présent dans le canal radio ou d'un signal associé à l'installation réceptrice un signal d'arrêt (7) qui arrête la commutation séquentielle du circuit de sélection (3).

2. Système radio pour fonctions de télécommande selon la revendication 1 avec émission d'un support de haute fréquence modulé, initié par l'actionnement de l'émetteur radio pour l'identification de l'émetteur et l'exécution de la fonction de télécommande, **caractérisé en ce qu'**après l'arrêt de la commutation séquentielle, c'est l'antenne avec laquelle le signal à haute fréquence a été reconnu qui est commutée pour recevoir le message capté ensuite pour l'identification de l'émetteur et l'exécution de la fonction de télécommande.

3. Système radio pour fonctions de télécommande selon la revendication 2, **caractérisé en ce que** l'installation de reconnaissance des signaux (8) contient un dispositif de reconnaissance du niveau HF (6) et qu'un signal d'arrêt (7) est généré lors de la reconnaissance du niveau du signal à haute fréquence.

4. Système radio pour fonctions de télécommande selon la revendication 2, avec émission d'un support de haute fréquence modulé, initié par l'actionnement de l'émetteur radio pour l'identification de l'émetteur et l'exécution de la fonction de télécommande, **caractérisé en ce que** pour la pré-identification du signal capté on utilise dans l'émetteur radio une modulation continue spécifique, lequel signal est suivi dans le temps du message émis pour l'identification définitive de l'émetteur et l'exécution de la fonction de télécommande, et qu'il est prévu dans l'installation de reconnaissance des signaux (8) pour la pré-identification un démodulateur servant à reconnaître la modulation spécifique.

5. Système radio pour fonctions de télécommande selon la revendication 2, avec émission d'un support de haute fréquence modulé, initié par l'actionnement de l'émetteur radio avec un signal de code à codage numérique ajouté par modulation pour l'identification de l'émetteur et suivi dans le temps d'un message numérique pour l'exécution de la fonction de télécommande, **caractérisé en ce que** les intervalles de temps dans l'horloge (4) pour la commutation de l'une des antennes (2) sur le récepteur (1) sont suffisamment plus longs que la durée du signal de code et **en ce qu'**il est prévu dans l'installation de reconnaissance des signaux (8) un circuit logique d'identification (17) pour la reconnaissance du signal de code, et si le signal de code est présent, un signal d'arrêt (7) est généré pour arrêter la commutation séquentielle du circuit de sélection (3), de sorte que c'est l'antenne avec le signal de sortie de laquelle le signal de code a été identifié qui est commutée sur le récepteur (1) pour recevoir le message numérique capté ensuite pour l'exécution de la fonction de télécommande.

6. Système radio pour fonctions de télécommande selon la revendication 5, **caractérisé en ce que** pour la sécurisation de la reconnaissance du mot de code, celui-ci est répété plusieurs fois dans le protocole de données avant l'émission du message numérique pour l'exécution de la fonction de télécommande et l'intervalle de temps est au moins deux fois plus long que la durée du signal de code et le nombre de répétitions au moins deux fois plus grand que le nombre d'antennes sur le véhicule.

7. Système radio pour fonctions de télécommande selon les revendications 1 à 6, **caractérisé en ce que** l'une des antennes au moins convient de préférence pour la réception d'ondes à polarisation horizontale et au moins une autre pour la réception d'ondes à polarisation verticale.

8. Système radio pour fonctions de télécommande selon les revendications 1 à 7, **caractérisé en ce que** les entrées de niveau dans les diagrammes directionnels d'azimut ne coïncident pas.

9. Système radio pour fonctions de télécommande selon les revendications 1 à 8, **caractérisé en ce que** toutes les antennes sont réalisées comme des antennes de vitre arrière.

10. Système radio pour fonctions de télécommande selon les revendications 1 à 8, **caractérisé en ce qu'**afin d'éviter les effets d'ombre à la réception, au moins une des antennes est disposée au niveau du pare-brise du véhicule et au moins une des antennes au niveau de la vitre arrière.

11. Système radio pour fonctions de télécommande selon les revendications 1 à 8, **caractérisé en ce qu'**au moins une des antennes est disposée dans le pare-chocs avant et au moins une des antennes dans le pare-chocs arrière.

12. Système radio pour fonctions de télécommande selon les revendications 1 à 8, **caractérisé en ce qu'**au moins une des antennes est disposée dans le pare-chocs avant et au moins une des antennes dans la vitre arrière du véhicule.

13. Système radio pour fonctions de télécommande selon les revendications 1 à 8, **caractérisé en ce qu'**au moins une des antennes est disposée dans l'un des rétroviseurs extérieurs et intérieurs et au moins une des antennes dans la vitre arrière du véhicule.

14. Système radio pour fonctions de télécommande selon les revendications 1 à 8, **caractérisé en ce qu'**au moins une des antennes est disposée dans l'une des vitres latérales et au moins une des antennes dans la vitre arrière du véhicule.

15. Système radio pour fonctions de télécommande selon les revendications 1 à 14, **caractérisé en ce que**, pour améliorer la sensibilité au bruit, on utilise des antennes actives pourvues d'un système d'optimisation du rapport signal/bruit, sélectif du canal.

16. Système radio pour fonctions de télécommande selon la revendication 15, **caractérisé en ce que**, pour économiser l'électricité en mode de disponibilité de l'installation réceptrice, chaque antenne active ne laisse passer un courant continu de repos que pendant les intervalles de temps pendant lesquels elle est commutée sur le récepteur.

17. Système radio pour fonctions de télécommande selon la revendication 16, **caractérisé en ce que** les signaux de sortie des antennes actives sont réunis dans un circuit totalisateur (12) et le circuit de sélection (3) est réalisé par le fait que l'alimentation en courant de repos des antennes actives pendant les intervalles de temps est fournie de façon séquentielle par un commutateur électronique économiseur commandé par l'horloge (4) servant à distribuer la tension de polarisation aux électrodes de commande des éléments actifs.

18. Système radio pour fonctions de télécommande selon les revendications 1 à 17, **caractérisé en ce qu'**un signal de début (13) est généré dans l'installation de reconnaissance des signaux (8) après l'apparition du signal d'arrêt (7), est amené à un processeur de diversité (14) et active celui-ci, et un signal de contrôle (15) provenant du récepteur (1) et dérivé à partir du signal de réception est amené au processeur de diversité (14) et évalué dans le processeur de diversité (14) en termes d'exploitabilité pour la fonction de télématique, et un signal de commutation de diversité (16) est généré si la limite d'exploitabilité du processeur de diversité (14) n'est pas atteinte, et transmis au circuit de sélection (3) pour faire commuter celui-ci.
